# EUROPEAN PATENT SPECIFICATION

(11) **EP 3 232 090 B1**
(45) Date of publication and mention of the grant of the patent: **13.05.2020**
(21) Application number: 16837968.3
(22) Date of filing: 18.02.2016
(51) Int. Cl.: F16H 57/08

(54) **MINIATURE GEAR BOX AND OUTPUT SHAFT THEREOF**
MIKROGETRIEBE UND ABTRIEBSWELLE DAFÜR
BOÎTE DE VITESSES MINIATURE ET ARBRE DE SORTIE CORRESPONDANT

(43) Date of publication of application: 18.10.2017
(73) Proprietor: Shenzhen Zhaowei Machinery&electronics Co., Ltd., Shenzhen, Guangdong 518103 (CN)
(72) Inventor: XIE, Weiqun, Shenzhen Guangdong 518103 (CN); XU, Shangxiang, Shenzhen Guangdong 518103 (CN); XIN, Dong, Shenzhen Guangdong 518103 (CN)
(74) Representative: Proi World Intellectual Property GmbH
(86) International application number: PCT/CN2016/074025
(87) International publication number: WO 2017/139944

(56) References cited:
- CN-U- 202 266 659
- CN-U- 202 349 000
- CN-U- 202 510 680
- CN-U- 203 098 801
- CN-U- 204 878 679
- CN-U- 204 900 757
- CN-U- 205 503 951
- DE-A1-102012 223 234
- DE-A1-102012 223 235
- DE-T5-112012 000 461
- US-A1- 2004 259 679

## Description

### BACKGROUND OF THE INVENTION

### Technical Field

The invention relates to the technical field of gearboxes, in particular to a miniature gear box and an output shaft thereof.

### 2. Description of Related Art

At present, miniature gear boxes which are small in size and high in reduction ratio are used more and more extensively for electronic door locks, communication equipment, precision instruments, medical instruments, smart homes and the like. Serving as the final power output elements, output shafts are the parts having the largest torque and bearing the largest force in the gearboxes. An existing output shaft of a miniature gear box is of a cylindrical structural design or a cylindrical structural design with a positioning cut edge; the output shaft is pressed onto the final stage of the planetary carrier of the gearbox through axial pressure when mounted, and axial movement of the output shaft is avoided through interference fit. However, after the gearbox operates for a long time, the interference magnitude between the output shaft and the planetary carrier is decreased gradually under the action of an alternating load, consequentially, the output shaft is prone to axial movement when bearing axial force, the performance of the gearbox is affected, and even failure where the output shaft disengages from the gearbox or the gearbox gets stuck in the axial direction occurs.
DE11 2012 000461T5 discloses a carrier used in a planetary gear mechanism.

### BRIEF SUMMARY OF THE INVENTION

The invention aims to overcome the defects in the prior art and provides a miniature gear box and an output shaft thereof, axial movement of the output shaft is avoided, the overall operating stability of the miniature gear box is improved, and accordingly the service life of the miniature gear box is prolonged.

The embodiment of the invention provides a miniature gear box, the miniature gear box comprises a shell, a planetary carrier which is arranged in the shell and attached to the inner end face of an output end of the shell, and an output shaft which penetrates through the output end of the shell and is fixedly positioned on the planetary carrier, wherein the output shaft comprises a shaft body and a positioning part which is coaxially arranged at the tail end of the shaft body, the positioning part and the planetary carrier are in limiting fit along the center axis of the output shaft and towards the outer end of the shaft body, and the outer end of the shaft body and the outer end face of the output shaft are in limiting fit along the center axis and towards the tail end of the shaft body.

Furthermore, both the shaft body and the positioning part are cylindrical, and the axis diameter of the positioning part is larger than the axis diameter of the shaft body.

Furthermore, a mounting hole is formed in the center of the planetary carrier, a sinking step groove is formed in the edge of the inner end of the mounting hole, a step matched with the sinking step groove is arranged on the periphery of the positioning part in a protruding mode, the positioning part penetrates through the mounting hole, and the step is contained in the sinking step groove and limits axial movement towards the outer end of the shaft body.

Furthermore, the peripheral wall of the positioning part is provided with a mounting cut edge, the inner wall of the mounting hole is provided with a positioning cut edge, and the mounting cut edge is attached to the positioning cut edge in parallel.

Furthermore, a bearing is arranged in a hole formed in the output end, and the shaft body rotatably penetrates through the bearing.

Furthermore, a snap ring groove is annularly formed in the periphery of the outer end of the shaft body, a snap ring is clamped in the snap ring groove, and the snap ring abuts against the outer end face of the output end of the shell and limits axial movement towards the tail end of the shaft body.

Furthermore, the outer end of the shaft body is sleeved with a spacer, and the spacer is clamped between the snap ring and the outer end face of the output end of the shell.

Furthermore, the peripheral wall of the outer end of the shaft body is provided with an output cut edge used for transmission connection.

Furthermore, the miniature gear box further comprises planetary gears connected with the planetary carrier, a motor gear engaged with the planetary gears, and an end cover covering the tail end of the shell.

The embodiment of the invention provides an output shaft used in a miniature gear box, wherein the miniature gear box comprises a shell and a planetary carrier which is arranged in the shell and attached to the inner end face of an output end of the shell, and the output shaft penetrates through the output end of the shell and is rotatably positioned on the planetary carrier; the output shaft comprises a shaft body and a positioning part coaxially arranged at the tail end of the shaft body, the positioning part and the planetary carrier are in limiting fit along the center axis of the output shaft and towards the outer end of the shaft body, and the outer end of the shaft body and the outer end face of the output end are in limiting fit along the center axis and towards the tail end of the shaft body.

Based on the above technical scheme, compared with the prior art, the miniature gear box and the output shaft thereof are provided by the embodiment of the invention, wherein the output shaft comprises the shaft body and the positioning part coaxially arranged at the tail end of the shaft body, and the output shaft is in limiting fit with the planetary carrier through the positioning part of the output shaft, so that movement along the center axis of the output shaft and towards the outer end of the output shaft is limited, and accordingly the problem where the output shaft moves towards the outside of the gearbox and consequentially disengages from the gearbox is solved; meanwhile, the output shaft is in limiting fit with the outer end face of the output end of the shell through the outer end of the shaft body of the output shaft, so that movement along the center axis of the output shaft and towards the tail end of the output shaft is limited, and accordingly the problem where the output shaft moves towards the inside of the gearbox and consequentially the gearbox gets stuck in the axial direction is solved. In this way, the overall operating stability of the miniature gear box is effectively improved, and the service life of the miniature gear box is prolonged; in addition, the miniature gear box is simple in structure and convenient to machine and assemble; meanwhile, the output shaft of the miniature gear box is good in universality, suitable for gearboxes with ordinary diameters and also suitable for gearboxes with small diameters.

### BRIEF DESCRIPTION OF THE SEVERAL VIEWS OF THE DRAWINGS

FIG. 1 is a schematic diagram of the solid structure of a miniature gear box provided by an embodiment of the invention;
FIG. 2 is a schematic diagram of the sectional structure of the miniature gear box provided by the embodiment of the invention;
FIG. 3 is a local schematic diagram of the sectional structure of the miniature gear box provided by the embodiment of the invention; and
FIG. 4 is a schematic diagram of the solid structure of an output shaft provided by the embodiment of the invention.

### DETAILED DESCRIPTION OF THE INVENTION

For a clearer understanding of the purposes, technical schemes and advantages of the invention, a further detailed description of the invention is given with accompanying drawings and embodiments as follows. It should be understood that the specific embodiment in the description is only used for explaining the invention, but not used for limiting the invention.

What needs to be pointed out is that when an element is 'fixed to' or 'arranged on' another element, the element can be directly located on another element or an intermediate element possibly exists; when an element is 'connected to' another element, the element can be directly connected to another element or an intermediate element possibly exists.

In addition, what needs to be pointed out is that the direction terms such as 'left', 'right', 'upper' and 'lower' in the embodiment of the invention are only relative concepts or take the normal service condition of a product for reference, and should not be restrictive. A detailed description of the implementation of the invention is given with the specific embodiment.

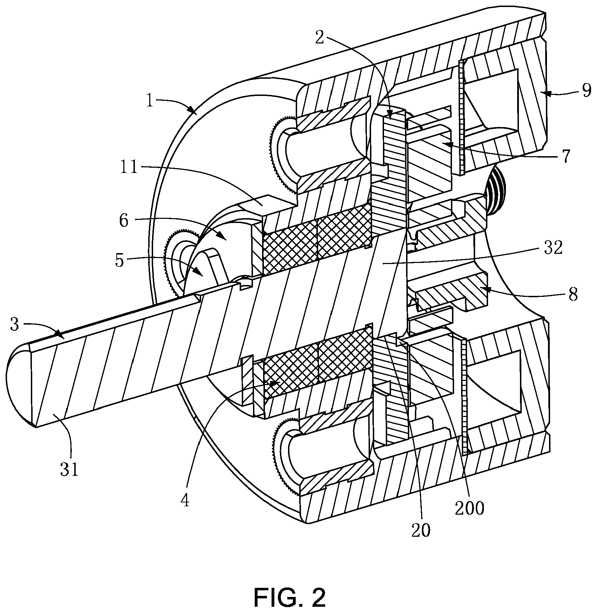

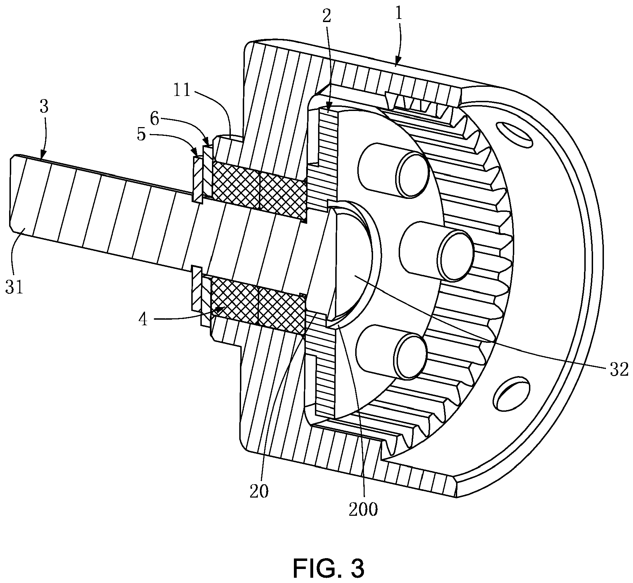

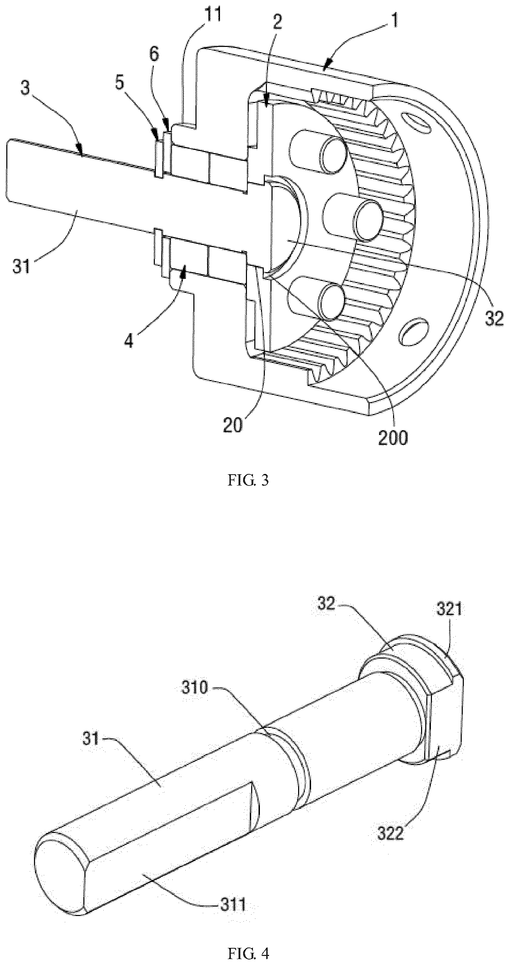

As is shown in FIGs. 1-4, the embodiment of the invention provides a miniature gear box which can comprise a shell 1, a planetary carrier 2 and an output shaft 3, wherein the shell 1 is a hollow shell with a hole formed in the front end and an opening formed in the tail end, in the embodiment, the front end of the shell 1 serves as an output end 11, the planetary carrier 2 is arranged in the shell 1 and attached to the inner end face of the output end 11, the output shaft 3 penetrates through the output end 11 of the shell 1, and the tail end of the output shaft 3 stretches into the shell 1 and is rotatably positioned on the planetary carrier 2 so that the output shaft 3 can be driven to rotate axially when the planetary carrier 2 rotates axially. Specifically, the output shaft 3 can comprise a shaft body 31 and a positioning part 32, wherein the positioning part 32 is coaxially arranged at the tail end of the shaft body 31. Inside the shell 1 of the miniature gear box, the positioning part 32 of the output shaft 3 and the planetary carrier 2 are in limiting fit along the center axis of the output shaft 3 and towards the outer end of the shaft body 31 of the output shaft 3; meanwhile, outside the shell 1 of the miniature gear box, the outer end of the shaft body 31 of the output shaft 3 and the outer end face of the output end 11 of the shell 1 are in limiting fit along the center axis of the output shaft 3 and towards the tail end of the shaft body 31 of the output shaft 3.

As mentioned above, the output shaft 3 of the miniature gear box provided by the embodiment of the invention comprises the shaft body 31 and the positioning part 32 coaxially arranged at the tail end of the shaft body 31, and in the embodiment, the output shaft 3 is in limiting fit with the planetary carrier 2 through the positioning part 32 of the output shaft 3, so that movement along the center axis of the output shaft 3 and towards the outer end of the output shaft 3 is limited, and accordingly the problem where the output shaft 3 moves towards the outside of the gearbox and consequentially disengages from the gearbox is solved; meanwhile, the output shaft 3 is in limiting fit with the outer end face of the output end 11 of the shell 1 through the outer end of the shaft body 31 of the output shaft 3, so that movement along the center axis of the output shaft 3 and towards the tail end of the output shaft 3 is limited, and accordingly the problem where the output shaft 3 moves towards the inside of the gearbox and consequentially the gearbox gets stuck in the axial direction is solved. In this way, the overall operating stability of the gearbox is effectively improved, and the service life of the gearbox is prolonged; in addition, the miniature gear box is simple in structure and convenient to machine and assemble; meanwhile, the output shaft 3 of the miniature gear box is good in universality, suitable for gearboxes with ordinary diameters and also suitable for gearboxes with small diameters.

Furthermore, in the embodiment of the invention, both the shaft body 31 and the positioning part 32 are preferably cylindrical, and the axis diameter of the positioning part 32 is larger than the axis diameter of the shaft body 31. In this way, by designing the shaft body 31 and the positioning part 32 to be cylindrical and making the axis diameter of the positioning part 32 larger than the axis diameter of the shaft body 31, the output shaft 3 and the planetary carrier 2 can be assembled and positioned more conveniently. Of course, the shaft body 31 and the positioning part 32 can also be in other shapes in other embodiments of the invention according to actual conditions and specific requirements without being limited uniquely.

Furthermore, in the embodiment of the invention, a mounting hole 20 is formed in the center of the planetary carrier 2 and matched with the positioning part 32 at the tail end of the output shaft 3, the positioning part 32 is contained in the mounting hole 20 and forms rotational positioning, and in this way, the output shaft 3 can be driven to rotate axially when the planetary carrier 2 rotates axially. Of course, the planetary carrier 2 can be in positioning and connecting fit with the output shaft 3 in other ways in other embodiments of the invention according to the actual conditions and specific requirements without being limited uniquely.

Furthermore, in the embodiment of the invention, a sinking step groove 200 is formed in the edge of the inner end of the mounting hole 20, a step 321 matched with the sinking step groove 200 is arranged on the periphery of the positioning part 32 in a protruding mode and contained in the sinking step groove 200, and the groove bottom of the sinking step groove 200 abuts against the step 321 to move towards the outer end of the mounting hole 20 at the same time, so that axial movement towards the outer end of the shaft body 31 is limited, namely the step 321 and the sinking step groove 200 are matched to prevent the output shaft 3 from moving towards the outside of the gearbox. In addition, a receding gap is formed between the inner wall of the sinking step groove 200 and the peripheral wall of the step 321, the end face of the positioning part 32 does not exceed the inner side face of the planetary carrier 2, namely the end face of the tail end of the output shaft 3 does not exceed the inner side face of the planetary carrier 2, and in this way, the positioning part 32 and the planetary carrier 2 can be assembled compactly and mounted easily and conveniently. Of course, the positioning part 32 of the output shaft 3 can also be in limiting fit with the planetary carrier 2 in other ways in other embodiments of the invention according to the actual conditions and specific requirements without being limited uniquely.

In the embodiment of the invention, the peripheral wall of the positioning part 32 is provided with a mounting cut edge 322, and the mounting cut edge 322 is a plane. Correspondingly, the inner wall of the mounting hole 20 of the planetary carrier 2 is provided with a positioning cut edge (not shown in the FIGs) matched with the mounting cut edge 322. After assembling, the positioning part 32 is contained in the mounting hole 20, and the mounting cut edge 322 on the peripheral wall of the positioning part 32 is attached to the positioning cut edge on the inner wall of the mounting hole 20 in parallel, so that the positioning part 32 and the planetary carrier 2 form rotational positioning. Of course, the positioning part 32 of the output shaft 3 can also be in rotational positioning fit with the planetary carrier 2 in other ways, such as a key connection way, in other embodiments of the invention according to actual conditions and specific requirements without being limited uniquely.

In the embodiment of the invention, a bearing 4 is arranged in a hole formed in the output end 11, and the shaft body 31 of the output shaft 3 rotatably penetrates through the bearing 4. Since the bearing 4 is arranged in the hole formed in the output shaft 11 and the shaft body 31 of the output shaft 3 rotatably penetrates through the bearing 4, rotational friction of the output shaft 3 is effectively reduced, and the overall performance of the miniature gear box is improved.

In the embodiment of the invention, a snap ring groove 310 is annularly formed in the periphery of the outer end of the shaft body 31, a snap ring 5 is clamped in the snap ring groove 310, and the snap ring 5 abuts against the outer end face of the output end 11 of the shell 1, so that axial movement towards the tail end of the shaft body 31 is prevented, and accordingly axial movement towards the tail end of the shaft body 31 is limited. In other words, the snap ring 5 is in abutting and limiting fit with the outer end face of the output end 11 for preventing the output shaft 3 from moving towards the inside of the gearbox, and thus the miniature gear box is prevented from getting stuck in the axial direction. Of course, the snap ring 5 can directly abut against the outer end face of the output end 11 and can also indirectly abut against the outer end face of the output end 11 in other embodiments of the invention according to actual conditions and specific requirements; in addition, the shaft body 31 of the output shaft 3 can be in limiting fit with the output end 11 in other ways without being limited uniquely.

Furthermore, in the embodiment of the invention, the outer end of the shaft body 31 is sleeved with a spacer 6, and the spacer 6 is clamped between the snap ring 5 and the outer end face of the output end 11 of the shell 1. In other words, the snap ring 5 is mounted in the snap ring groove 310 and located on the outer side of the outer end face of the output end 11 of the shell 1, the spacer 6 is mounted between the snap ring 5 and the outer end face of the output end 11 for reducing friction, and in this way, the output shaft 3 is prevented from moving towards the inside of the gearbox under the combined action of the snap ring 5, the spacer 6 and the outer end face of the output end 11. Of course, the friction between the spacer 6 and the outer end face of the output end 11 can be reduced in other ways in other embodiments of the invention according to actual conditions and specific requirements without being limited uniquely.

In the embodiment of the invention, the peripheral wall of the outer end of the shaft body 31 is provided with an output cut edge 311, and the output cut edge 311 is used for being in transmission connection with other external equipment for achieving power transmission. In addition, the output cut edge 311 and the mounting cut edge 322 are both used for torque transmission when the output shaft 3 rotates. Of course, the outer end of the shaft body 31 can be in transmission connection with other external equipment in other ways, such as a key connection way, in other embodiments of the invention according to actual conditions and specific requirements without being limited uniquely.

Furthermore, in the embodiment of the invention, the miniature gear box further comprises a planetary gears 7, a motor gear 8 and an end cover 9, wherein the end cover 9 covers an opening in the tail end of the shell 1, the end cover 9 covers the shell 1 to form an inner cavity, the planetary carrier 2, the planetary gears 7 and the motor gear 8 are all arranged in the inner cavity, the planetary gears 7 is movably connected to the planetary carrier 2, and the motor gear 8 is engaged with the planetary gears 7. In this way, the motor gear 8 rotates to drive the planetary gears 7 engaged with the motor gear 8 to rotate, the planetary gears 7 then drives the planetary carrier 2 to rotate, and the planetary carrier 2 then drives the output shaft 3 to rotate. Of course, the miniature gear box can further comprise other components in other embodiments of the invention according to actual conditions and specific requirements without being limited uniquely.

In the embodiment of the invention, when the miniature gear box is mounted, the positioning part 32 at the tail end of the output shaft 3 is mounted in the mounting hole 20 of the planetary carrier 2 firstly, then the bearing 4 is arranged in an output hole (namely the hole) formed in the output end 11 of the shell 1, afterwards the outer end of the shaft body 31 of the output shaft 3 stretches out of the bearing 4, other parts of the miniature gear box are then mounted, finally the spacer 6 and the snap ring 5 are mounted at the outer end of the shaft body 31 of the output shaft 3, and thus the output shaft 3 is mounted.

As is shown in FIGs 1-4, the embodiment of the invention further provides an output shaft 3 used in the miniature gear box, the miniature gear box can comprise the shell 1, the planetary carrier 2 and the output shaft 3, wherein the shell 1 is a hollow shell with a hole formed in the front end and an opening formed in the tail end, in the embodiment, the front end of the shell 1 serves as an output shaft 11, the planetary carrier 2 is arranged in the shell 1 and attached to the inner end face of the output end 11, the output shaft 3 penetrates through the output end 11 of the shell 1, and the tail end of the output shaft 3 stretches into the shell 1 and is rotatably positioned on the planetary carrier 2 so that the output shaft 3 can be driven to rotate axially when the planetary carrier 2 rotates axially. Specifically, the output shaft 3 can comprise a shaft body 31 and a positioning part 32, wherein the positioning part 32 is coaxially arranged at the tail end of the shaft body 31, and the positioning part 32 of the output shaft 3 is in limiting fit with the planetary carrier 2 particularly along the center axis of the output shaft 3 and towards the outer end of the shaft body 31 of the output shaft 3; meanwhile, the outer end of the shaft body 31 of the output shaft 3 is in limiting fit with the outer end face of the output end 11 of the shell 1 particularly along the center axis of the output shaft 3 and towards the tail end of the shaft body 31 of the output shaft 3.

Based on the above technical scheme, the positioning part 32 of the output shaft provided by the embodiment of the invention is in limiting fit with the planetary carrier 2, so that movement along the center axis of the output shaft and towards the outer end of the output shaft is limited, and the problem where the output shaft 3 moves towards the outside of the gearbox and consequentially disengages from the gearbox is solved; the outer end of the shaft body 31 of the output shaft is in limiting fit with the outer end face of the output end 11 of the shell 1, so that movement along the center axis of the output shaft and towards the tail end of the output shaft is limited, and the problem where the output shaft 3 moves towards the inside of the gearbox and consequentially the gearbox gets stuck axially is solved; the overall operating stability of the miniature gear box is effectively improved, and the service life of the miniature gear box is prolonged; in addition, the output shaft 3 is good in universality, suitable for gearboxes with ordinary diameters and also suitable for gearboxes with small diameters.

The above embodiment is only the specific embodiment of the invention and does not limit the scope of protection of the invention, those skilled in the technical field can easily obtain various equivalent modifications, replacements and improvements in the technical scope disclosed by the invention, and the modifications, replacements and improvements are all included in the scope of protection of the invention. Therefore, the scope of protection of the invention is defined by the claims.

## Claims

1. A gear box, in particular a miniature gear box, comprising a shell (1), a planetary carrier (2) which is arranged in the shell (1) and attached to an inner end face of an output end (11) of the shell (1), and an output shaft (3) which penetrates through the output end (11) of the shell (1) and is fixedly positioned on the planetary carrier (2), **characterized in that** the output shaft (3) comprises a shaft body (31) and a positioning part (32) coaxially arranged at a tail end of the shaft body (31), wherein the positioning part (32) and the planetary carrier (2) are in limiting fit along a center axis of the output shaft (3) and towards an outer end of the shaft body (31), and wherein the outer end of the shaft body (31) and an outer end face of the output end (11) of the shell (1) are in limiting fit along the center axis and towards the tail end of the shaft body (31).

2. The gear box according to Claim 1, **characterized in that** both the shaft body (31) and the positioning part (32) are cylindrical, and an axis diameter of the positioning part (32) is larger than an axis diameter of the shaft body (31).

3. The gear box according to Claim 2, **characterized in that** a mounting hole (20) is formed in a center of the planetary carrier (2), a sinking step groove (200) is formed in an edge of an inner end of the mounting hole (20), a step (321) matched with the sinking step groove (200) is arranged on the periphery of the positioning part (32) in a protruding mode, the positioning part (32) penetrates through the mounting hole (20), and the step (321) is contained in the sinking step groove (200) and limits axial movement towards the outer end of the shaft body (31).

4. The gear box according to Claim 3, **characterized in that** a peripheral wall of the positioning part (32) is provided with a mounting cut edge (322), an inner wall of the mounting hole (20) is provided with a positioning cut edge, and the mounting cut edge (322) is attached to the positioning cut edge in parallel.

5. The gear box according to Claim 3, **characterized in that** a bearing (4) is arranged in a hole formed in the output end (11), and the shaft body (31) rotatably penetrates through the bearing (4).

6. The gear box according to Claim 1, **characterized in that** a snap ring groove (310) is annularly formed in the periphery of the outer end of the shaft body (31), a snap ring (5) is clamped in the snap ring groove (310), and the snap ring (5) abuts against the outer end face of the output end (11) of the shell (1) and limits axial movement towards the tail end of the shaft body (31).

7. The gear box according to Claim 6, **characterized in that** the outer end of the shaft body (31) is sleeved with a spacer (6), and the spacer (6) is clamped between the snap ring (5) and the outer end face of the output end (11) of the shell (1).

8. The gear box according to any of Claims 1-7, **characterized in that** a peripheral wall of the outer end of the shaft body (31) is provided with an output cut edge (311) used for transmission connection.

9. The gear box according to any of Claims 1-7, **characterized in that** the gear box further comprises planetary gears (7) connected with the planetary carrier (2), a motor gear (8) engaged with the planetary gears (7), and an end cover (9) covering a tail end of the shell (1).

## Patentansprüche

1. Getriebe, insbesondere ein Mikrogetriebe, umfassend
eine Schale (1), einen Planetenträger (2), der in der Schale (1) angeordnet und an der inneren Endfläche eines Ausgangsende (11) der Schale (1) angebracht ist, und eine Ausgangswelle (3), die das Ausgangsende (11) der Schale (1) durchdringt und fest auf dem Planetenträger (2) positioniert ist,
**dadurch gekennzeichnet ist, dass**
die Ausgangswelle (3) einen Wellenkörper (31) und einen am hinteren Ende des Wellenkörpers (31) koaxial angeordneten Positionierteil (32) umfasst, wobei der Positionierteil (32) und der Planetenträger (2) entlang der Mittelachse der Ausgangswelle (3) und in Richtung des äußeren Endes des Wellenkörpers (31) begrenzt sind und wobei das äußere Ende des Wellenkörpers (31) und eine äußere Endfläche des Ausgangsende (11) der Schale (1) entlang der Mittelachse und in Richtung des hinteren Endes des Wellenkörpers (31) begrenzt sind.

2. Getriebe nach Anspruch 1, **dadurch gekennzeichnet, dass** sowohl der Wellenkörper (31) als auch der Positionierteil (32) zylindrisch sind und der Achsendurchmesser des Positionierteils (32) größer ist als der Achsendurchmesser des Wellenkörpers (31).

3. Getriebe nach Anspruch 2, **dadurch gekennzeichnet, dass** in der Mitte des Planetenträgers (2) ein Montageloch (20) ausgebildet ist, am Rand des inneren Endes des Montagelochs (20) eine Sinkstufennut (200) ausgebildet ist, eine Stufe (321), die mit der Sinkstufennut (200) abgestimmt ist, ist am Umfang des Positionierteils (23) in einem hervorstehenden Modus angeordnet, das Positionierteil (32) dringt durch das Montageloch (20), und die Stufe (321) ist in der Sinkstufennut (200) enthalten und begrenzt die axiale Bewegung zum äußeren Ende des Wellenkörpers (31).

4. Getriebe nach Anspruch 3, **dadurch gekennzeichnet, dass** die Umfangswand des Positionierteils (32) mit einer Montageschnittkante (322) versehen ist, die Innenwand des Montagelochs (20) mit einer Positionierschnittkante versehen ist und die Montageschnittkante (322) in paralleler Ausrichtung an der Positionierschnittkante angebracht ist.

5. Getriebe nach Anspruch 3, **dadurch gekennzeichnet, dass** ein Lager (4) in einem am Ausgangsende (11) ausgebildeten Loch angeordnet ist und der Wellenkörper (31) drehbar durch das Lager (4) dringt.

6. Getriebe nach Anspruch 1, **dadurch gekennzeichnet, dass** am Umfang des äußeren Endes des Wellenkörpers (31) ringförmig eine Sprengringnut (310) ausgebildet ist, in der Sprengringnut (310) ein Sprengring (5) eingeklemmt ist und der Sprengring (5) an der äußeren Endfläche des Ausgangsende (11) der Schale (1) anliegt und die axiale Bewegung zum hinteren Ende des Wellenkörpers (31) begrenzt.

7. Getriebe nach Anspruch 6, **dadurch gekennzeichnet, dass** das äußere Ende des Wellenkörpers (31) mit einem Abstandshalter (6) ummantelt ist und der Abstandshalter (6) zwischen dem Sprengring (5) und der äußeren Endfläche des Ausgangsende (11) der Schale (1) eingeklemmt ist.

8. Getriebe nach einem der Ansprüche 1 bis 7, **dadurch gekennzeichnet, dass** die Umfangswand des äußeren Endes des Wellenkörpers (31) mit einer Ausgangsschnittkante (311) versehen ist, die zum Getriebeanschluss verwendet wird.

9. Getriebe nach einem der Ansprüche 1 bis 7, **dadurch gekennzeichnet, dass** das Getriebe ferner Planetenräder (7), die mit dem Planetenträger (2) verbunden sind, ein Motorgetriebe (8), das mit den Planetenrädern (7) in Eingriff steht, und eine Endabdeckung (9) umfasst, die das hintere Ende der Schale (1) bedeckt.

## Revendications

1. Boîte d'engrenages, en particulier une boîte d'engrenages miniature, composée d'une coque (1), d'un porte-satellites (2) qui est agencé dans la coque (1) et fixé à une face d'extrémité intérieure d'une extrémité de sortie (11) de la coque (1), et un arbre de sortie (3) qui pénètre à travers l'extrémité de sortie (11) de la coque (1) et qui est positionné à demeure sur le porte-satellites (2), **caractérisée en ce que** l'arbre de sortie (3) comprend un corps d'arbre (31) et une pièce de positionnement (32) agencés de manière coaxiale à l'extrémité arrière du corps de l'arbre (31), dans laquelle la pièce de positionnement (32) et le porte-satellites (2) sont montés en butée le long de l'axe central de l'arbre de sortie (3) et vers une extrémité extérieure du corps de l'arbre (31) et dans laquelle l'extrémité extérieure du corps de l'arbre (31) et une face d'extrémité extérieure de l'extrémité de sortie (11) de la coque (1) sont montée en butée le long de l'axe central et vers l'extrémité arrière du corps de l'arbre (31).

2. Boîte d'engrenages selon la revendication 1, **caractérisée en ce que** le corps de l'arbre (31) et la pièce de positionnement (32) sont cylindriques, et un diamètre de l'axe de la pièce de positionnement (32) est supérieur à un diamètre de l'axe du corps de l'arbre (31).

3. Boîte d'engrenages selon la revendication 2, **caractérisée en ce qu'**un trou de montage (20) est formé au centre du porte-satellites (2), une rainure de marche d'enfoncement (200) est formée sur le bord d'une extrémité intérieure du trou de montage (20), une marche (321) adaptée à la rainure de la marche d'enfoncement (200) est agencée à la périphérie de la pièce de positionnement (32) en mode saillant, la pièce de positionnement (32) pénètre à travers le trou de montage (20), et la marche (321) est contenue dans la rainure de la marche d'enfoncement (200) et limite le mouvement axial vers l'extrémité extérieure du corps de l'arbre (31).

4. Boîte d'engrenages selon la revendication 3, **caractérisée en ce qu'**une paroi périphérique de la pièce de positionnement (32) est pourvue d'un méplat de montage (322), une paroi intérieure du trou de montage (20) est pourvue d'un méplat de positionnement et le méplat de montage (322) est fixé au méplat de positionnement en parallèle.

5. Boîte d'engrenages selon la revendication 3, **caractérisée en ce qu'**un roulement (4) est agencé dans un trou formé dans l'extrémité de sortie (11) et que le corps de l'arbre (31) pénètre de manière rotative à travers le roulement (4).

6. Boîte d'engrenages selon la revendication 1, **caractérisée en ce qu'**une rainure du segment d'arrêt (310) est formée de manière annulaire à la périphérie de l'extrémité extérieure du corps de l'arbre (31), un segment d'arrêt (5) est serré dans la rainure du segment d'arrêt (310) et le segment d'arrêt (5) vient en butée contre la face d'extrémité extérieure de l'extrémité de sortie (11) de la coque (1) et limite le mouvement axial vers l'extrémité arrière du corps de l'arbre (31).

7. Boîte d'engrenages selon la revendication 6, **caractérisée en ce que** l'extrémité extérieure du corps de l'arbre (31) est manchonnée avec une entretoise (6) et que l'entretoise (6) est serrée entre le segment d'arrêt (5) et la face d'extrémité extérieure de l'extrémité de sortie (11) de la coque (1).

8. Boîte d'engrenages selon l'une des revendications 1 à 7, **caractérisée en ce qu'**une paroi périphérique de l'extrémité extérieure du corps de l'arbre (31) est fournie avec un méplat de sortie (311) utilisé pour la liaison de transmission.

9. Boîte d'engrenages selon l'une des revendications 1 à 7, **caractérisée en ce que** la boîte d'engrenages comprend en outre des pignons planétaires (7) reliés au porte-satellites (2), un pignon moteur (8) entré en prise avec les pignons planétaires (7) et un couvercle d'extrémité (9) couvrant une extrémité arrière de la coque (1).
